(19) Europäisches Patentamt
European Patent Office
Office européen des brevets

(11) **EP 3 216 005 B1**

(12) **EUROPEAN PATENT SPECIFICATION**

(45) Date of publication and mention
of the grant of the patent:
**27.11.2019 Bulletin 2019/48**

(51) Int Cl.:
***G06T 7/80*** *(2017.01)*

(21) Application number: **15709897.1**

(22) Date of filing: **11.03.2015**

(86) International application number:
**PCT/EP2015/055058**

(87) International publication number:
**WO 2016/141984 (15.09.2016 Gazette 2016/37)**

(54) **IMAGE PROCESSING DEVICE AND METHOD FOR GEOMETRIC CALIBRATION OF IMAGES**

BILDVERARBEITUNGSVORRICHTUNG UND VERFAHREN ZUR GEOMETRISCHEN KALIBRIERUNG VON BILDERN

DISPOSITIF ET PROCÉDÉ DE TRAITEMENT D'IMAGES POUR ÉTALONNAGE GÉOMÉTRIQUE D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.09.2017 Bulletin 2017/37**

(73) Proprietor: **HUAWEI TECHNOLOGIES CO., LTD.**
**Shenzhen Guangdong 518129 (CN)**

(72) Inventors:
• **PIOTTO, Nicola**
  **80992 Munich (DE)**
• **KONDRAD, Lukasz**
  **80992 Munich (DE)**
• **CORDARA, Giovanni**
  **80992 Munich (DE)**
• **KONIECZNY, Jacek**
  **80992 Munich (DE)**
• **URFALIOGLU, Onay**
  **80992 Munich (DE)**

(74) Representative: **Kreuz, Georg Maria**
**Huawei Technologies Duesseldorf GmbH**
**Riesstraße 25**
**80992 München (DE)**

(56) References cited:
• **KURILLO GREGORIJ ET AL: "Geometric and Color Calibration of Multiview Panoramic Cameras for Life-Size 3D Immersive Video", 2013 INTERNATIONAL CONFERENCE ON 3D VISION, IEEE, 29 June 2013 (2013-06-29), pages 374-381, XP032480448, DOI: 10.1109/3DV.2013.56 [retrieved on 2013-09-13]**
• **LI BO ET AL: "A multiple-camera system calibration toolbox using a feature descriptor-based calibration pattern", 2013 IEEE/RSJ INTERNATIONAL CONFERENCE ON INTELLIGENT ROBOTS AND SYSTEMS, IEEE, 3 November 2013 (2013-11-03), pages 1301-1307, XP032537577, ISSN: 2153-0858, DOI: 10.1109/IROS.2013.6696517 [retrieved on 2013-12-26]**

## Description

TECHNICAL FIELD

The invention relates to an image processing device and method for performing a geometric alignment of images, especially of images recorded by cameras of different orientations.

BACKGROUND

In the field of computer vision and computational photography, the geometric alignment of images recorded with different orientations is of great importance. Especially for stitching the images together to achieve panoramic images, a geometric calibration of cameras or camera locations is necessary. So far, a significantly overlapping field of view (FOV) between the images was necessary to determine such a geometric alignment.

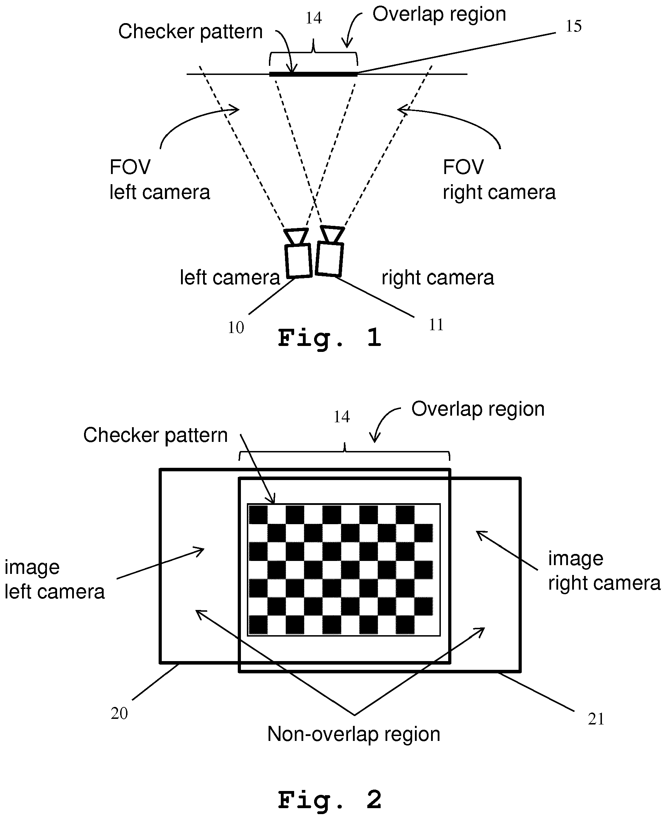

In order to estimate extrinsic parameters, which map a position and/or orientation of one camera to a reference camera, a calibration target 15, e.g. with a planar surface with a known calibration pattern, e.g. a checkered pattern, as shown in Fig. 1, is placed in an area, which can be seen by each camera 10, 11 at the same time instance. This is shown by the overlap region 14 in Fig. 1.

Next a picture is taken by each camera 10, 11. The resulting images 20, 21 can be seen for example in Fig. 2. Also here, the overlap region 14 of a shared field of view of the first camera 10 and the second camera 11 are shown.

The geometry of the known calibration pattern is then exploited to estimate the extrinsic parameters mapping position and orientation of the camera or cameras to one selected reference camera. Multiple pictures can be taken by each camera, in order to capture the pattern in different (and random) positions/orientations. A use of multiple pictures is beneficial as it increases robustness and accuracy, because errors in the identification of the points of the pattern can result in incorrect estimation of the extrinsic parameters.

In the foregoing procedure, the cameras 10, 11 to be calibrated need to share a significant portion of their fields of view, large enough to fit the entire calibration pattern, e.g. the checkered pattern from Figure 1.

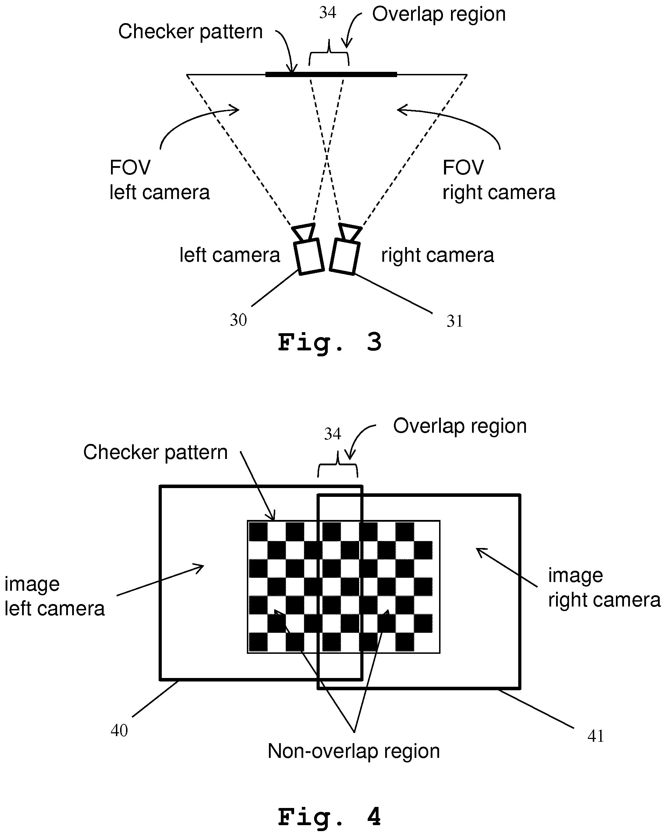

However, in applications like panorama stitching, a minimal overlapping field of view between adjacent cameras is useful to reduce the number of necessary cameras. Such a setup can be seen in Fig. 3 and Fig. 4. Here a first camera 30 records a first image 40 and a second camera 31 records a second image 41. The images 40, 41 have a small overlap region 34 of shared field of view.

When dealing with image panorama stitching, the accurate estimation of the camera extrinsic parameters, i.e., their relative position/orientation is crucial. In fact, the relative rotations between the cameras drive the process of merging the local pixel information from multiple images to a unique extended canvas, regardless of the projective layout considered, e.g., rectilinear, cylindrical, spherical, etc.

In standard image stitching scenarios, the input pictures share a significant portion of their visual content, for example -50%. The extrinsic camera calibration in these cases is usually performed by extracting and matching distinctive features, e.g., SIFT, SURF from an image pair, and estimating the relative camera position/orientation from the matching samples. In other words, the checkered pattern is replaced by natural features.

In case the field of view overlap of two cameras is minimal, as shown in Fig. 3 and Fig. 4, or even not present, the typical methods described above fail to provide meaningful results.

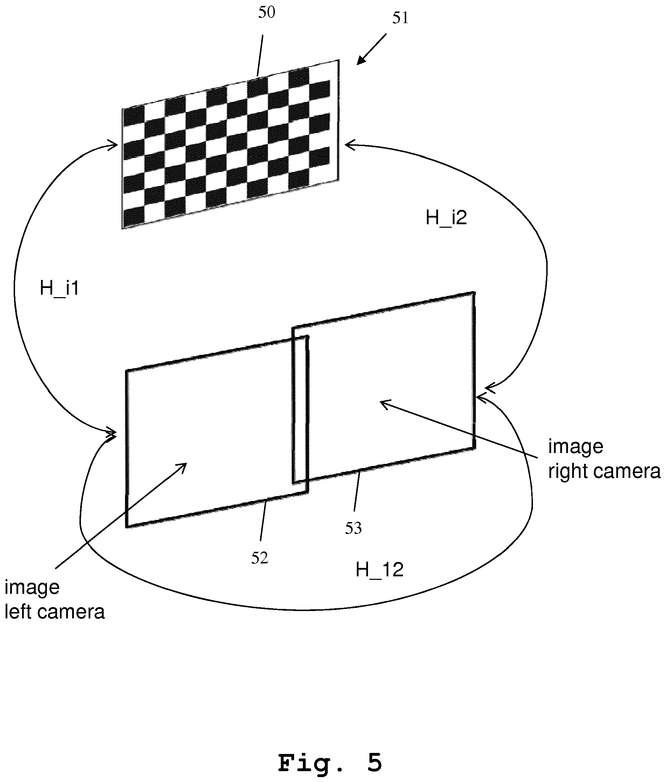

To solve this issue, an exemplary method uses a pair of texture pictures, e.g. I1 and I2 in Fig. 5 with very limited overlap. Consequently, each of the texture pictures I1, I2 contains only a small portion of the calibration pattern 51, e.g. a checkerboard. However, due to the fact that the geometry of the calibration pattern 51 is known, a homography, e.g. H_i1 for I1 and H_i2 for I2 from Fig. 5, describing the mapping between the image planes and the pattern plane, which is a reference plane containing an undistorted representation of the calibration pattern, can be computed, e.g. by Direct Linear Transformation, using just the portion of the captured calibration pattern, for each texture picture, e.g. I1 and I2 from Fig. 5. Having H_i1 and H_i2, a homography mapping of I1 and I2, e.g. H_12 from Fig. 5 can be derived by concatenating the computed homographies:

$$H\_12 = H\_i1 \times H\_i2^{-1}$$

Especially, the calibration of the images is reduced to a homography when the camera centers are aligned. Although the described process is based on the identification of homographies for aligned camera centers, it can be used when the camera centers are not aligned. Instead of a homography, then a more generic transformation is used.

However, the solution described above possesses some drawbacks that have an impact on the numerical stability of the estimated extrinsic parameters, especially the homography, e.g. H_12 in Fig. 5.

The problem of the process described above is that the homography, e.g. H_12 in Fig. 5, is not obtained directly, but by concatenating intermediate homographies, e.g. H_1 and H_2 from Fig. 5. In other words, the process maps the pattern in a texture picture of each camera to the common plane of the calibration pattern. This means that homographies are estimated from a single pair of texture pictures, without the possibility to move the pattern. This results in potential inaccuracies in the extrinsic parameters. Small errors, due to in the computation of the intermediate homographies, e.g. H_1 and H_2 from Fig. 5 will significantly affect the accuracy of the final extrinsic estimation, e.g., H_12 = H_i1 x H_i2^-1. The errors may be due to noise, a non-perfect detection of the points in the calibration pattern, or the limited resolution of the numerical representation. The resulting estimated extrinsic parameters can be quite inaccurate.

"A Multiple-Camera System Calibration Toolbox Using A Feature Descriptor-Based Calibration Pattern" from Bo li et al., presents a feature descriptor based calibration pattern and a Matlab toolbox which uses the specially designed pattern to easily calibrate both the intrinsics and extrinsics of a multiple-camera system. In contrast to existing calibration patterns, in particular, the ubiquitous chessboard, the proposed pattern contains many more features of varying scales; such features can be easily and automatically detected. The proposed toolbox supports the calibration of a camera system which can comprise either normal pinhole cameras or catadioptric cameras. The calibration only requires that neighboring cameras observe parts of the calibration pattern at the same time; the observed parts may not overlap at all. No overlapping fields of view are assumed for the camera system.

"Geometric and Color Calibration of Multiview Panoramic Cameras for Life-Size 3D Immersive Video" from Gregorij Kurillo et al., addresses calibration of camera arrays for life-size 3D video acquisition and display where mosaicking and multi-viewpoint stereo are combined to provide an immersive experience which, by its size, resolution, and three-dimensionality, is meant to rival being there. This coupling of multiview and mosaicking requires integration of numerous synchronized video streams in a single presentation, aligned for both panoramic blending and epipolar rectification.

SUMMARY

Accordingly, an object of the present invention is to provide an apparatus and method, which allow for a geometric calibration of images, which does not need any field of view overlap and achieves high calibration accuracy.

The object is solved by the features of claim 1 for the image processing device, claims 9 and 10 for the imaging systems and claim 13 for the method. Further it is solved by the features of claim 14 for the associated computer program. The dependent claims contain further developments.

The operational scenario of the described invention is the same as described earlier in regard to Fig. 3 and Fig. 4. That means a calibration target comprising a known calibration pattern is placed across adjacent cameras FOV, but it is not entirely visible in either of the cameras. A shared field of view is not necessary. However, contrary to the above described process, a direct homography estimation method is proposed, allowing a direct and more accurate parameter estimation of the extrinsic parameters, e.g. the homography H_12 from Fig. 5. The direct calculation is possible due to a proposed extrapolation of the location of missing points beyond the section of the calibration pattern depicted by the images.

Optionally, in order to reduce the effect of noisy detection of corners in the calibration pattern, thus increasing the precision of the calibration, the proposed method allows considering several observations and jointly processed adopting iterative methods for parameter estimation, e.g. RANSAC and similar.

Benefits of the proposed technology are:

- The method does not require overlap in the cameras FOV.
- The mapping homography is found with direct methods and relies on the extrapolation of reference pattern corners falling outside the image.
- Multiple corresponding corners can be identified between the detected corners from one image, and the extrapolated from the other one.
- Direct methods allow coping with noise in the measurements, e.g., RANSAC, resulting in an increased accuracy of the final estimate

The cameras advantageously share a common central point, thus the camera extrinsic calibration is reduced in finding the homography mapping of one image plane to the other.

According to a first aspect of the invention, an image processing device for performing a geometric calibration of at least a first image and a second image is provided. The first image depicts a first section of a calibration target and the second image depicts a second section of the calibration target. The surface of the calibration target has a known calibration pattern. The image processing device comprises a feature recognition unit adapted to detect features of the known calibration pattern within the first image and within the second image. Moreover, the image processing device comprises a homography calculation unit adapted to determine a first homography of the first image and the calibration target by determining at least one of a position, an orientation and a deformation of the features of the known calibration pattern within the first image, and determine a second homography of the second image and the calibration target by determining at least one of a position, an orientation and a deformation of the features of the known calibration pattern within the second image. Also, the image processing device comprises a feature extrapolation unit adapted to extrapolate further features of the known calibration pattern outside of the field of view of the first image based upon the known calibration pattern and the first homography. The feature extrapolation unit is moreover adapted to extrapolate features of the known calibration pattern outside the field of view of the second image based upon the known calibration pattern and of the second homography. The image processing device furthermore comprises a geometry calculation unit adapted to determine a third homography between the first image and the second image based upon the features of the known calibration pattern within the first image, the features of the known calibration pattern within the second image, the extrapolated further features of the known calibration pattern outside the field of view of the first image, and the extrapolated further features of the known calibration pattern outside of the field of view of the second image. It is thereby possible to very accurately determine the geometric calibration of the first image and the second image with minimal or no field of view overlap.

According to a first implementation form of the first aspect, the first section of the calibration target and the second section of the calibration target comprise at least partially different sections of the known calibration pattern. This allows for carrying out the calibration with high accuracy.

According to a second implementation form of the first aspect, the first image is recorded by a first camera and the second image is recorded by a second camera at the same time instance. Additionally or alternatively, the first camera and the second camera have a fixed geometric arrangement when the first picture and the second picture are recorded. It is thereby possible to either simultaneously record images by different cameras or successively record images using only a single camera and moving the camera between recording the images. A very flexible construction of the system is thereby possible. According to a third implementation form of the first aspect, the known calibration pattern is a repetitive geometric pattern. The first section of the calibration target depicts at least a first border and/or corner of the repetitive geometric pattern. The second section of the calibration target depicts at least a second border and/or corner of the repetitive geometric pattern. The feature recognition unit is adapted to detect at least the first border and/or corner of the repetitive geometric pattern within the first image and at least the second border and/or corner within the second image. The homography calculation unit is then adapted to determine the first homography by determining the position and/or orientation and/or deformation of at least the first border and/or corner of the repetitive geometric pattern within the first image, and to determine the second homography by determining the position and/or orientation and/or deformation of at least the second border and/or corner of the repetitive geometric pattern within the second image. It is thereby possible to use a very simple calibration target.

Alternatively, according to a fourth implementation form of the first aspect, the known calibration pattern is an at least partially non-repetitive geometric pattern. The first section of the calibration target depicts at least a first non-repetitive feature of the known calibration pattern. The second section of the calibration target depicts at least a second non-repetitive feature of the known calibration pattern. The feature recognition unit is adapted to detect at least the first non-repetitive feature of the known calibration pattern within the first image and at least the second non-repetitive feature of the known calibration pattern within the second image. The pattern recognition unit is adapted to determine the first homography by determining at least the position and/or orientation and/or deformation of the first non-repetitive feature of the known calibration pattern within the first image and to determine the second homography by determining at least the position and/or orientation and/or deformation of the second non-repetitive feature of the known calibration pattern within the second image. An increased flexibility of positioning the calibration target can thereby be achieved since it is not necessary to capture borders or corners of the calibration pattern by the images.

According to a fifth implementation form of the first aspect, the known calibration pattern is a photography image. The homography determination unit is then adapted to determine the first homography by performing a correspondence search for the first section of the calibration target within the first image and to determine the second homography by performing a correspondence search for the second section of the calibration target within the second image. With this alternative, a very accurate, but calculation-intensive processing is found.

According to a first implementation form of the fifth implementation form, the correspondence search performed by the homography determination unit is a likeliness based search or a feature matching search. A further increase in calibration accuracy can thereby be achieved.

According to a sixth implementation form of the first aspect, the geometry calculation unit is adapted for determining matching features within the features of the known calibration pattern within the first image and the extrapolated further features of the known calibration pattern outside of the field of view of the second image, determining matching features within the features of the known calibration pattern within the second image and the extrapolated further features of the known calibration pattern outside of the field of view of the first image. Moreover, it is adapted to determine the third homography so that it transforms the features of the known calibration pattern within the first image to the matching extrapolated further features of the known calibration pattern outside the field of view of the second image and transforms the features of the known calibration pattern within the second image to the matching extrapolated further features of the known calibration pattern outside the field of view of the first image. A further increase in calibration accuracy can thereby be achieved.

According to a seventh implementation form of the first aspect or any of the previously described implementation forms, the image processing device is adapted for performing a geometric calibration of a plurality of images. Each of the images of the plurality of images depicts a section of the calibration target. The homography determination unit is adapted to determine an individual homography for each of the images of the plurality of images with regard to the calibration target. The geometry calculation unit is adapted to determine a homography for each of the images of the plurality of images with regard to a single reference image of the plurality of images. A calibration of more than two cameras or image orientations is thereby possible.

According to a second aspect of the invention, an imaging system is provided. The imaging system comprises an earlier described image processing device and at least a first camera and a calibration target. The first camera is then adapted to generate the first image and the second image by successively recording images of the calibration target. It is thereby possible to generate calibrated images using only a very simple hardware-setup.

According to a third aspect of the invention, an imaging system comprising an image processing device as described earlier, a first camera, at least a second camera and a calibration target is provided. The first camera and the second camera have a fixed geometric arrangement. The first camera is adapted to generate the first image and the second camera is adapted to generate the second image by simultaneously recording images of the calibration target. With this alternative setup, it is possible to generate calibrated images in systems with two or more cameras.

According to a first implementation form of the third aspect, an imaging system with an earlier described image processing device for calibrating at least three images is provided. The imaging system then comprises a plurality of cameras.

According to a second implementation form of the third aspect, an imaging system is provided wherein adjacent cameras do not have a shared field of view. Especially in such a setup, it is possible still to generate highly accurate calibrated images.

According to a fourth aspect of the invention, an image processing method for performing a geometric calibration of at least a first image and a second image is provided. The first image depicts a first section of a calibration target and the second image depicts a second section of the calibration target. The surface of the calibration target has a known calibration pattern. The image processing method comprises detecting features of the known calibration pattern within the first image and within the second image, determining a first homography of the first image and the calibration target by determining at least one of a position, an orientation and a deformation of the features of the known calibration pattern within the first image, determining a second homography of the second image and the calibration target by determining at least one of a position, an orientation and a deformation of the features of the known calibration pattern within the second image. Moreover, the image processing method comprises extrapolating further features of the known calibration pattern outside the field of view of the first image based upon the known calibration pattern and the first homography and extrapolating features of the known calibration pattern outside of the field of view of the second image based upon the known calibration pattern and the second homography. The method further comprises determining a third homography between the first image and the second image based upon the features of the known calibration pattern within the first image, the features of the known calibration pattern within the second image, the extrapolated further features of the known calibration pattern outside of the field of view of the first image, and the extrapolated features of the known calibration pattern outside of the field of view of the second image. It is thereby possible to generate highly accurate calibrated images with only a low computational complexity.

According to a first implementation form of the fourth aspect, the first section of the calibration target and the second section of the calibration target comprise at least partially different sections of the known calibration pattern. This allows for carrying out the calibration with high accuracy.

According to a second implementation form of the fourth aspect, the first image is recorded by a first camera and the second image is recorded by a second camera at the same time instance. Additionally or alternatively, the first camera and the second camera have a fixed geometric arrangement when the first picture and the second picture are recorded. It is thereby possible to either simultaneously record images by different cameras or successively record images using only a single camera and moving the camera between recording the images. A very flexible construction of the system is thereby possible.

According to a third implementation form of the fourth aspect, the known calibration pattern is a repetitive geometric pattern. The first section of the calibration target depicts at least a first border and/or corner of the repetitive geometric pattern. The second section of the calibration target depicts at least a second border and/or corner of the repetitive geometric pattern. The first border and/or corner of the repetitive geometric pattern within the first image and at least the second border and/or corner within the second image are detected. The first homography is determined by determining the position and/or orientation and/or deformation of at least the first border and/or corner of the repetitive geometric pattern within the first image. The second homography is determined by determining the position and/or orientation and/or deformation of at least the second border and/or corner of the repetitive geometric pattern within the second image. It is thereby possible to use a very simple calibration target.

Alternatively, according to a fourth implementation form of the fourth aspect, the known calibration pattern is an at least partially non-repetitive geometric pattern. The first section of the calibration target depicts at least a first non-repetitive feature of the known calibration pattern. The second section of the calibration target depicts at least a second non-repetitive feature of the known calibration pattern. The first non-repetitive feature of the known calibration pattern within the first image is detected and at least the second non-repetitive feature of the known calibration pattern within the second image is detected. The first homography is determined by determining at least the position and/or orientation and/or deformation of the first non-repetitive feature of the known calibration pattern within the first image and to the second homography is determined by determining at least the position and/or orientation and/or deformation of the second non-repetitive feature of the known calibration pattern within the second image. An increased flexibility of positioning the calibration target can thereby be achieved since it is not necessary to capture borders or corners of the calibration pattern by the images.

According to a fifth implementation form of the fourth aspect, the known calibration pattern is a photography image. The first homography is determined by performing a correspondence search for the first section of the calibration target within the first image and the second homography is determined by performing a correspondence search for the second section of the calibration target within the second image. With this alternative, a very accurate but calculation-intensive processing is found. According to a first implementation form of the fifth implementation form, the correspondence search performed is a likeliness based search or a feature matching search. A further increase in calibration accuracy can thereby be achieved.

According to a sixth implementation form of the fourth aspect, matching features within the features of the known calibration pattern within the first image and the extrapolated further features of the known calibration pattern outside of the field of view of the second image are determined. Matching features within the features of the known calibration pattern within the second image and the extrapolated further features of the known calibration pattern outside of the field of view of the first image are determined. Moreover, the third homography is determined so that it transforms the features of the known calibration pattern within the first image to the matching extrapolated further features of the known calibration pattern outside the field of view of the second image and transforms the features of the known calibration pattern within the second image to the matching extrapolated further features of the known calibration pattern outside the field of view of the first image. A further increase in calibration accuracy can thereby be achieved.

According to a seventh implementation form of the fourth aspect or any of the previously described implementation forms, a geometric calibration of a plurality of images is performed. Each of the images of the plurality of images depicts a section of the calibration target. An individual homography is determined for each of the images of the plurality of images with regard to the calibration target. A homography is determined for each of the images of the plurality of images with regard to a single reference image of the plurality of images. A calibration of more than two cameras or image orientations is thereby possible.

According to a fifth aspect of the invention, a computer program with the program code for performing the earlier described method when the computer program runs on a computer, is provided.

Generally, it has to be noted that all arrangements, devices, elements, units and means and so forth described in the present application could be implemented by software or hardware elements or any kind of combination thereof. Furthermore, the devices may be processors or may comprise processors, wherein the functions of the elements, units and means described in the present applications may be implemented in one or more processors. All steps which are performed by the various entities described in the present application as well as the functionality described to be performed by the various entities are intended to mean that the respective entity is adapted to or configured to perform the respective steps and functionalities. Even if in the following description or specific embodiments, a specific functionality or step to be performed by a general entity is not reflected in the description of a specific detailed element of that entity which performs that specific step or functionality, it should be clear for a skilled person that these methods and functionalities can be implemented in respect of software or hardware elements, or any kind of combination thereof.

BRIEF DESCRIPTION OF DRAWINGS

The present invention is in the following explained in detail in relation to embodiments of the invention in reference to the enclosed drawings, in which

FIG. 1      shows a first exemplary camera setup;

FIG. 2      shows resulting images of a calibration target;

FIG. 3      shows a second exemplary camera setup;

FIG. 4      shows resulting images of a calibration target;

FIG. 5      shows an overview of an exemplary method for generating a geometric calibration of images;

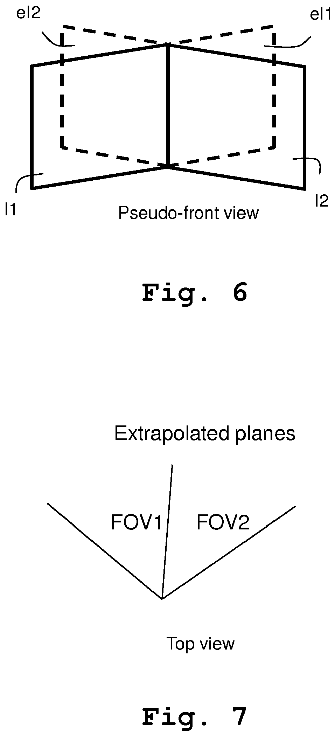

FIG. 6      shows a geometric arrangement of two images in a pseudo-front view;

FIG. 7      shows a geometric arrangement of images in a top view;

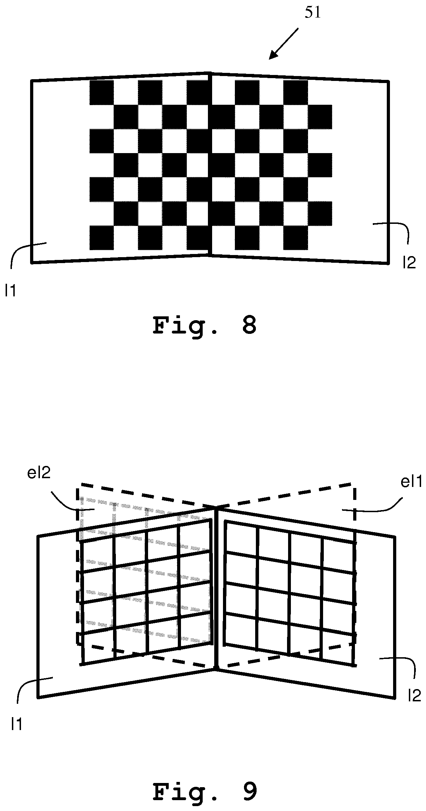

FIG. 8      shows two exemplary images of a calibration target;

FIG. 9      shows a geometric arrangement of two images of a calibration target;

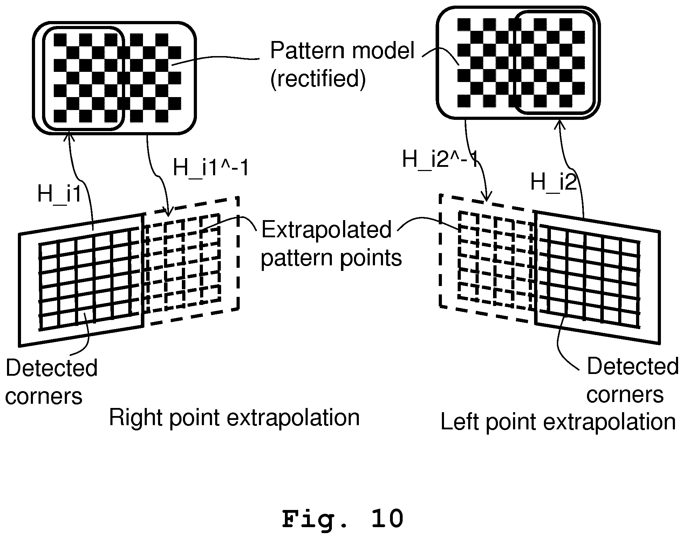

FIG. 10      shows a geometric arrangement of images of a calibration target and extrapolated features beyond the fields of view of the images;

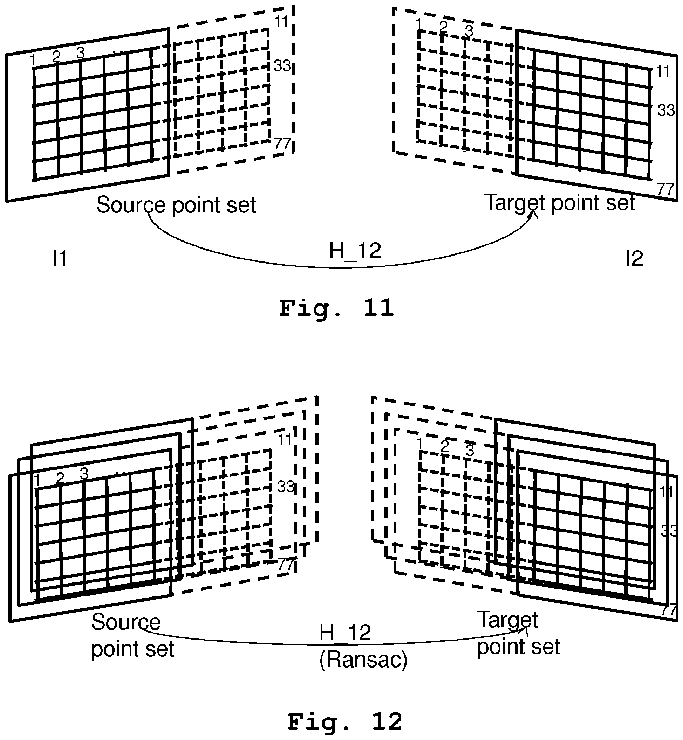

FIG. 11      shows an exemplary feature matching between features and extrapolated features;

FIG. 12      shows an exemplary feature matching performed on a plurality of images;

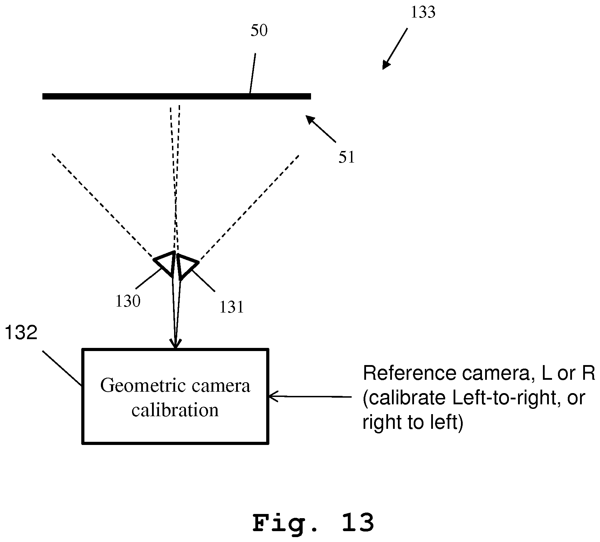

FIG. 13      shows a first embodiment of the imaging system and the image processing device of the

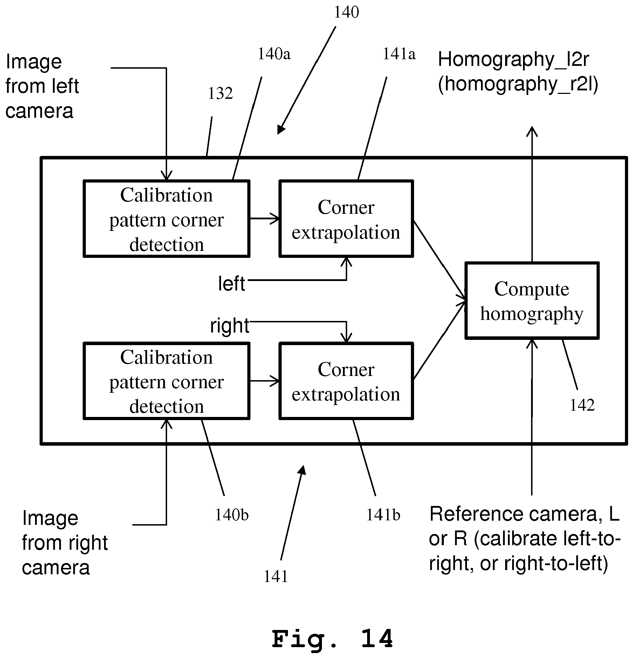

FIG. 14     shows a second embodiment of the image processing device of the invention;

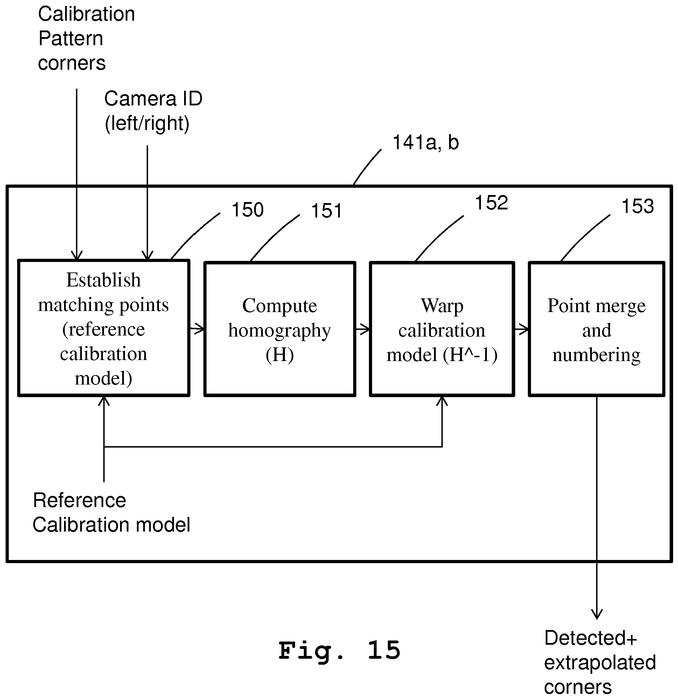

FIG. 15     shows a detailed view of parts of a third embodiment of the image processing device of the invention, and

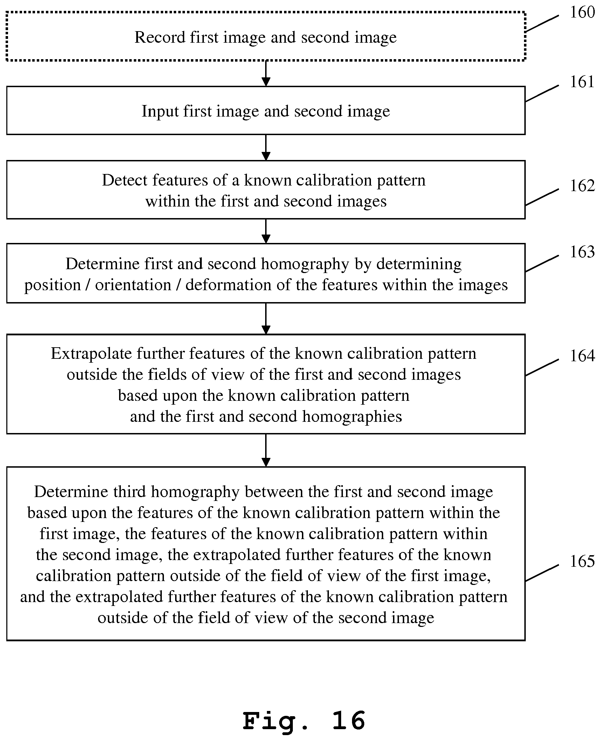

FIG. 16     shows an embodiment of the method of the invention in a flow diagram.

## DESCRIPTION OF EMBODIMENTS

First we demonstrate the mathematics and the general concept and processing underlying the exemplary embodiments with respect to FIG. 1 - 12. In a second step, the construction and function of the imaging system and image processing device are shown along FIG. 13 - 15. Finally, with respect to FIG. 16, the function of an embodiment of the image processing method of the invention is explained. Similar entities and reference numbers and different figures have been partially omitted.

For a direct computation of a homography, e.g. H_12 from Fig. 5, corresponding point pairs, advantageously at least 4 are provided to transformation algorithms, e.g., Direct Linear Transform - DLT. However, when the overlap in the field of view is limited or even does not exist, such correspondences are not easily obtained, i.e., they cannot be obtained by image processing only. Therefore, to obtain these corresponding pairs, we exploit the knowledge of the geometry of the calibration pattern, and extrapolate the missing points over the physical border of the texture picture as depicture in Fig. 6.

There it can readily be seen that a first image I1 and a second image I2 are adjacently located but in this example does not share a field of view. The first image I1 is extrapolated to an extrapolated image eI1. The second image I2 is extrapolated to an extrapolated image eI2.

This can also readily be seen in FIG. 7. There a top view of the setup shown in FIG. 6 is depicted. It is readily available from FIG. 7 that the first image and second image do not share a field of view.

In FIG. 8 again a first image I1 and a second image I2 of a calibration target 50, as depicted in FIG. 5 having a known calibration pattern 51, is shown. In FIG. 9, resulting extrapolated images eI1 and eI2 including the extrapolated features of the calibration pattern 51 are depicted. In the following, the process underlying the present invention is described.

Once the points beyond the both texture pictures I1, I2 are extrapolated, the homography, e.g. H_12 from Fig. 5 can be directly computed.

First a first image I1 and a second image I2 are recorded. Each image I1, I2 depicts a section of the known calibration pattern 51. These sections are extracted from each image I1, I2. In case of using a simple repetitive geometric calibration pattern, e.g. a checkered pattern, relying on a subset, e.g. ~50% of the corners in the pattern model, not all corners may be are visible local homographies, e.g. H_i1 and H_i2 in Fig. 10 are computed. The local homographies are also referred to as first and second homographies in the following.

Once the local homographies are known, the points missing outside of the physical image regions are extrapolated, e.g., for I2 the dashed points on right image in the bottom part of Fig. 10. Once the pattern points have been extrapolated, they are numbered according to a global reference, e.g., the reference calibration pattern, allowing creating matching pair points.

In order to find the virtual locations of the model pattern points not fitting the physical dimensions of the image, the whole pattern model corners are simply transformed by H_i1^-1, or H_i2^-1 in Fig. 10. In this way, the point locations beyond the image borders are estimated.

More specifically, given the set of $n$ corners of the model pattern in homogeneous coordinates $C = \{c_0, c_1, c_2, .., c_n\}$ where $c_i = (x_i, y_i, 1)^T$ for $i = 0..n$ (e.g, n=11x8=88 in Fig. 10, and an homography matrix

$$H = \begin{pmatrix} h0 & h1 & h2 \\ h3 & h4 & h5 \\ h6 & h7 & h8 \end{pmatrix}$$

note: H can be either H_i1^-1, or H_i2^-1, depending on which points I want extrapolate, see Fig. 10, a new set of $n$ corners can be found by multiplying each corner $c_i$ by the matrix H, e.g., $c_i' = H \cdot c_i$.

Note:

1) the detected corners will be transformed, ideally, to their initial original position, due to numerical approximations in the H_i1, H_i2 computation, the locations will almost coincide;

2) the non-visible points will be reprojected to their virtual positions.

Alternatively, instead of reprojecting all the model pattern corners, the set of detected corners can be maintained, while only the corners not corresponding to any detected corner can be transformed. Referring to Fig. 10, this means reprojecting only the corner of the model chessboard not surrounded by the rectangle.

With the extrapolated points, matching pairs can be built considering the corners detected in I1 or I2 and the extrapolated points from I2 or I1 in Fig. 11. The extrapolated points are numbered here with column and line numbers.

Having a direct mapping between the two images, therefore, it is possible to apply iterative calibration relying on multiple images capturing the calibration pattern in several different positions. In this way, robustness of the computed homography is increased.

Moreover, multiple source and target point sets can be obtained by capturing the reference pattern in different positions/orientations, as shown in Fig. 12, allowing the application of RANSAC-based solutions for homography estimation. This feature ensures the accuracy and stability of the final solution, i.e., H_12 parameters.

In FIG. 13 an embodiment of the imaging system 133 of the invention is shown. The imaging system 133 comprises a first camera 130, a second camera 131, a calibration target 50 comprising a known calibration pattern 51 and an image processing unit 132. The cameras 130, 131 are arranged so that they record images of the calibration target 50, especially of the known calibration pattern 51. In this example, the fields of view of the cameras 130, 131 slightly overlap. Each image of the cameras 130, 131 shows a section of the calibration target 50. In this case, the sections slightly overlap, since the fields of view slightly overlap. This is though not necessary. The resulting images of the cameras 130, 131 are handed to the image processing unit 132, which performs the geometric calibration. Regarding the further processing by the image processing unit 132, it is referred to the further elaborations regarding Fig. 14 and 15.

As already briefly described, the calibration pattern 51 can be a simple repetitive geometric pattern like a checkered pattern. Also it can be an at least partially non-repetitive geometric pattern. For example, the checkered pattern can be supplemented by adding symbols to some of the fields of the checkered pattern. Also a natural image, a photography image can be used as calibration pattern. Also more than two cameras can be used. Any further camera also records an image of the calibration target 50.

Moreover, it is not even necessary to use two different cameras. Alternatively, a single camera successively recording at least two images of the calibration target 50 after changing the orientation or position of the camera is possible.

In FIG. 14, an embodiment of the image processing device 132 of the invention is shown. The image processing device 132 comprises a feature recognition unit 140, which is constituted by a first feature recognition module 140a and a second feature recognition module 140b. Each of the feature recognition modules 140a, 140b is connected to an extrapolation module 141a, 141b, which form an extrapolation unit 141. The individual extrapolation modules 141a, 141b are in turn connected to a geometry calculation unit 142. An image I1 from a first camera is handed to the first feature recognition module 140a. A second image I2 of a second camera is handed to the second feature recognition module 140b. The feature recognition modules 140a, 140b detect features of the known calibration pattern 51 within the first image I1 and the second image I2. The results are handed on to the extrapolation modules 141a, 141b of the extrapolation unit 141. This unit 141 is also supplied with the first image I1 and the second image I2. The first extrapolation module 141a determines a first homography of the first image and a calibration target and extrapolates further features of the known calibration pattern outside the field of view of the first image. The results are handed on to the geometry calculation unit 142. The second extrapolation module 141b determines a second homography of the second image and the calibration target and extrapolates features of the non-calibration pattern outside of the field of view of the second image. Also these results are handed on to the geometry calculation unit 142. The inner workings of the extrapolation unit 141 are further explained with regard to FIG. 15. The geometry calculation unit 142 determines a third homography between the first image and the second image based upon the features of the known calibration pattern within the first image, the features of the known calibration pattern within the second image, the extrapolated further features of the known calibration pattern outside of the field of view of the first image and the extrapolated further features of the known calibration pattern outside of the field of view of the second image. The resulting third homography constitutes the geometric calibration of the first and second image I1, I2.

In FIG. 15, details of a further embodiment of the image processing device 132 are shown. Especially an extrapolation module 141a, 141b is depicted. The extrapolation module 141a, b comprises a feature matching unit 150, which is adapted for matching points of the calibration pattern 51 within the respective image I1, I2 with a reference calibration module. Given a set of features, for example borders/corners of a repetitive geometric pattern detected in one image by the feature recognition unit 140 and a reference model of the used calibration pattern, correspondences between the detected features and the model features are determined. Moreover, the extrapolation module 141a, b comprises a homography calculation unit 151, which is adapted to determine a homography of the image and the calibration target by determining at least one of a position, an orientation and a deformation of the features of the known calibration pattern within the respective image. The homography calculation unit 151 is connected to the feature matching unit 150 and receives its input information therefrom. Moreover, the homography calculation unit 151 is connected to a warping unit 152 which is adapted to perform a warping of the respective image to match the model reference calibration pattern. The warping unit 152 is connected to the homography calculation unit 151 and to a feature merging and numbering unit 153, which performs a feature merging and numbering. The features detected in the image and the extrapolated features are merged and a numbering is given consistent with the reference model. The warping unit 152 and the feature merging and numbering unit 153 in combination form a feature extrapolation unit.

To summarize, the feature extrapolation unit is adapted to extrapolate further features of the known calibration pattern outside of the field of view of the respective image based upon the known calibration pattern and the respective homography determined by the homography calculation unit 151.

As a calibration pattern 51, a simple repetitive geometric pattern can be used. In this case, the feature recognition unit 140 detects borders and/or corners of the repetitive geometric pattern. The homography calculation unit 151 then determines the homography by determining the position and/or orientation and/or deformation of at least the border and/or corner of the repetitive geometric pattern within the respective image.

Alternatively, an at least partially non-repetitive geometric pattern can be used as calibration pattern 51. In this case, each of the images comprises at least one non-repetitive feature of the calibration pattern. The feature recognition unit 140 is then adapted to detect at least the non-repetitive features of the calibration pattern within the respective images. The homography determination unit 151 is then adapted to determine the homography by determining at least the position and/or orientation and/or deformation of the respective non-repetitive feature of the known calibration pattern within the respective image.

As a further alternative, a photography image can be used. The feature recognition unit 140 is then adapted to recognize natural features of the photography image. The homography determination unit 151 is adapted to determine the respective homography by performing a correspondence search for the respective section of the calibration target within the respective image.

Especially, a likeliness based search or a feature matching search can be used.

In FIG. 16, an embodiment of the image processing method of the invention is shown. In an optional first step 160, a first image and a second image are recorded. This can be done by a single camera or two different cameras. Alternatively, a greater number of images can be recorded.

In a second step 161 the first image and the second image are input. In case the optional first step 160 was not performed, pre-recorded images can be used. In a third step 162 features of a known calibration pattern within the first and second images are detected. In a fourth step 163 first and second homographies are determined by determining a position and/or orientation and/or deformation of the detected features within the respective images.

In a fifth step 164, further features of the known calibration pattern outside of the fields of view of the first and second images are extrapolated based upon the known calibration pattern and the first and second homographies. In a final sixth step 165, a third homography of the first and second image is determined. The third homography is determined based upon the features of the known calibration pattern within the first image, the features of the known calibration pattern within the second image, the extrapolated further features of the known calibration pattern outside of the field of view of the first image and the extrapolated further features of the known calibration pattern outside of the field of view of the second image.

Regarding the details of each of the above-described steps, it is also referred to the respective elaborations regarding the device and system regarding FIG. 5 - 15.

The invention is not limited to the examples and especially not to use of only two cameras. The invention discussed above can be applied to either setups with more than two cameras or to setups with only a single camera recording at least two images successively. The characteristics of the exemplary embodiments can be used in any advantageous combination.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising" does not exclude other elements or steps and the indefinite article "a" or "an" does not exclude a plurality. A single processor or other unit may fulfill the functions of several items recited in the claims. The mere fact that certain measures are recited in usually different dependent claims does not indicate that a combination of these measures cannot be used to advantage.

Embodiments of the invention may be implemented in a computer program for running on a computer system, at least including code portions for performing steps of a method according to the invention when run on a programmable apparatus, such as a computer system or enabling a programmable apparatus to perform functions of a device or system according to the invention.

A computer program is a list of instructions such as a particular application program and/or an operating system. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system.

The computer program may be stored internally on computer readable storage medium or transmitted to the computer system via a computer readable transmission medium. All or some of the computer program may be provided on transitory or non-transitory computer readable media permanently, removably or remotely coupled to an information processing system. The computer readable media may include, for example and without limitation, any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, etc.; and data transmission media including computer networks, point-to-point telecommunication equipment, and carrier wave transmission media, just to name a few.

A computer process typically includes an executing (running) program or portion of a program, current program values and state information, and the resources used by the operating system to manage the execution of the process. An operating system (OS) is the software that manages the sharing of the resources of a computer and provides programmers with an interface used to access those resources. An operating system processes system data and user input, and responds by allocating and managing tasks and internal system resources as a service to users and programs of the system.

The computer system may for instance include at least one processing unit, associated memory and a number of input/output (I/O) devices. When executing the computer program, the computer system processes information according to the computer program and produces resultant output information via I/O devices.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Thus, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in nonprogrammable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

**Claims**

1. An image processing device (132) for performing a geometric calibration of at least a first image (I1) and a second image (I2), wherein the first image (I1) depicts a first section of a calibration target (50) and the second image (I2) depicts a second section of the calibration target (50), wherein the surface of the calibration target (50) has a known calibration pattern (51),

wherein the image processing device (132) comprises:

- a feature recognition unit (140) adapted to

detect features of the known calibration pattern (51) within the first image (I1), and detect features of the known calibration pattern (51) within the second image (I2),

- a homography calculation unit (151) adapted to

determine a first homography of the first image (I1) and the calibration target by determining at least one of a position, an orientation, and a deformation of the features of the known calibration pattern (51) within the first image (I1), and determine a second homography of the second image (I2) and the calibration target by determining at least one of a position, an orientation, and a deformation of the features of the known calibration pattern (51) within the second image (I2), and

- a feature extrapolation unit (152, 153) adapted to
extrapolate further features of the known calibration pattern (51) outside of the field of view of the first image (I1) based upon the known calibration pattern (51) and the first homography, and extrapolate features of the known calibration pattern (51) outside of the field of view of the second image (I2) based upon the known calibration pattern (51) and the second homography, and
- a geometry calculation unit (142) adapted to determine a third homography between the first image (I1) and the second image (I2) based upon the features of the known calibration pattern (51) within the first image, the features of the known calibration pattern (51) within the second image, the extrapolated further features of the known calibration pattern (51) outside of the field of view of the first image (I1), and the extrapolated further features of the known calibration pattern (51) outside of the field of view of the second image (I2);

wherein the known calibration pattern (51) is an at least partially non-repetitive geometric pattern, wherein the first section of the calibration target (50) depicts at least a first non-repetitive feature of the known calibration pattern (51), wherein the second section of the calibration target (50) depicts at least a second non-repetitive feature of the known calibration pattern (51), wherein the feature recognition unit (140) is adapted to

- detect at least the first non-repetitive feature of the known calibration pattern (51) within the first image, and
- detect at least the second non-repetitive feature of the known calibration pattern (51) within the second image,

wherein the homography determination unit (151) is adapted to determine the first homography by determining at least the position and/or orientation and/or deformation of the first non-repetitive feature of the known calibration pattern (51) within the first image (I1) and to determine the second homography by determining at least the position and/or orientation and/or deformation of the second non-repetitive feature of the known calibration pattern (51) within the second image.

2. The image processing device (132) according to claim 1, wherein the first section of the calibration target (50) and the second section of the calibration target (50) comprise at least partially different sections of the known calibration pattern (51).

3. The image processing device (132) according to claim 1, wherein the first image (I1) is recorded by a first camera (131) and the second image (I2) is recorded by a second camera (131) at a same time instance, and/or
wherein the first camera (131) and the second camera (131) have a fixed geometric arrangement when the first image (I1) and the second image (I2) are recorded.

4. The image processing device (132) according to claim 1, wherein the known calibration pattern (51) is a repetitive geometric pattern,
wherein the first section of the calibration target (50) depicts at least a first border and/or corner of the repetitive geometric pattern,
wherein the second section of the calibration target (50) depicts at least a second border and/or corner of the repetitive geometric pattern,
wherein the feature recognition unit (140) is adapted to

detect at least the first border and/or corner of the repetitive geometric pattern within the first image, and
detect at least the second border and/or corner of the repetitive geometric pattern within the second image, wherein the homography calculation unit (151) is adapted to
determine the first homography by determining the position and/or orientation and/or deformation of at least the first border and/or corner of the repetitive geometric pattern within the first image, and
determine the second homography by determining the position and/or orientation and/or deformation of at least the second border and/or corner of the repetitive geometric pattern within the second image.

5. The image processing device (132) according to claim 1, wherein the known calibration pattern (51) is a photography image,
wherein the homography determination unit (151) is adapted to

determine the first homography by performing a correspondence search for the first section of the calibration target (50) within the first image, and
determine the second homography by performing a correspondence search for the second section of the calibration target (50) within the second image.

6. The image processing device (132) according to claim 5, wherein the correspondence search performed by the homography determination unit is a likeliness based search or a feature matching search.

7. The image processing device (132) according to claim 1, wherein the geometry calculation unit is adapted for

 - determining matching features within the features of the known calibration pattern (51) within the first image (I1) and the extrapolated further features of the known calibration pattern (51) outside of the field of view of the second image,
 - determining matching features within the features of the known calibration pattern (51) within the second image (I2) and the extrapolated further features of the known calibration pattern (51) outside of the field of view of the first image, and
 - determining the third homography so that it

   ∘ transforms the features of the known calibration pattern (51) within the first image (I1) to the matching extrapolated further features of the known calibration pattern (51) outside of the field of view of the second image (I2), and
   ∘ transforms the features of the known calibration pattern (51) within the second image (I2) to the matching extrapolated further features of the known calibration pattern (51) outside of the field of view of the first image (I1).

8. The image processing device (132) according to claim 1 to 7, wherein the image processing device (132) is adapted for performing a geometric calibration of a plurality of images (I1, I2), wherein each of the images (I1, I2) of the plurality of images (I1, I2) depicts a section of the calibration target (50), wherein the homography determination unit (151) is adapted to determine an individual homography for each of the images (I1, I2) of the plurality of images (I1, I2) with regard to the calibration target (50), and wherein the geometry calculation unit (142) is adapted to determine a homography for each of the images (I1, I2) of the plurality of images (I1, I2) with regard to a single reference image of the plurality of images (I1, I2).

9. An imaging system (133) comprising an image processing device (132) according to claim 1 and at least a first camera (131) and a calibration target (50), wherein the first camera (131) is adapted to generate the first image (I1) and the second image (I2) by successively recording images of the calibration target (50).

10. An imaging system (133) comprising an image processing device (132) according to claim 1, a first camera (130), a second camera (131) and a calibration target (50), wherein the first camera (13) and the second camera (131) have a fixed geometric arrangement, wherein the first camera (130) is adapted to generate the first image (I1) and the second camera (131) is adapted to generate the second image (I2) by simultaneously recording images of the calibration target (50).

11. The imaging system (133) according to claim 10, comprising an image processing device (132) according to claim 9, wherein the imaging system (133) comprising a plurality of cameras.

12. The imaging system (133) according to claim 10, wherein adjacent cameras do not have a shared field of view.

13. An image processing method for performing a geometric calibration of at least a first image (I1) and a second image, wherein the first image (I1) depicts a first section of a calibration target (50) and the second image (I2) depicts a second section of the calibration target (50), wherein the surface of the calibration target (50) has a known calibration pattern (51), wherein the known calibration pattern (51) is an at least partially non-repetitive geometric pattern, wherein the first section of the calibration target (50) depicts at least a first non-repetitive feature of the known calibration pattern (51), wherein the second section of the calibration target (50) depicts at least a second non-repetitive feature of the known calibration pattern (51), wherein the image processing method comprises

 - detecting (162) at least the first non-repetitive feature of the known calibration pattern (51) within the first image,
 - detecting (162) at least the second non-repetitive feature of the known calibration pattern (51) within the second image,
 - determining (163) a first homography of the first image (I1) and the calibration target by determining at least one of a position, an orientation, and a deformation of the features of the known calibration pattern (51) within the first image (I1),

- determining (163) a second homography of the second image (I2) and the calibration target by determining at least one of a position, an orientation, and a deformation of the features of the known calibration pattern (51) within the second image (I2),

- extrapolating (164) further features of the known calibration pattern (51) outside of the field of view of the first image (I1) based upon the known calibration pattern (51) and the first homography,

- extrapolating (164) features of the known calibration pattern (51) outside of the field of view of the second image (I2) based upon the known calibration pattern (51) and the second homography, and

- determining (165) a third homography between the first image (I1) and the second image (I2) based upon the features of the known calibration pattern (51) within the first image (I1), the features of the known calibration pattern (51) within the second image (I2), the extrapolated further features of the known calibration pattern (51) outside of the field of view of the first image (I1), and the extrapolated further features of the known calibration pattern (51) outside of the field of view of the second image (I2).

14. A computer program with a program code for performing the method according to claim 13 when the computer program runs on a computer.

**Patentansprüche**

1. Bildverarbeitungsvorrichtung (132) zum Durchführen einer geometrischen Kalibrierung wenigstens eines ersten Bildes (I1) und eines zweiten Bildes (I2), wobei das erste Bild (I1) einen ersten Bereich eines Kalibrierungsziels (50) darstellt und das zweite Bild (I2) einen zweiten Bereich des Kalibrierungsziels (50) darstellt, wobei die Oberfläche des Kalibrierungsziels (50) ein bekanntes Kalibrierungsmuster (51) aufweist, wobei die Bildverarbeitungsvorrichtung (132) Folgendes umfasst:

- eine Merkmalserkennungseinheit (140), die angepasst ist, um Merkmale des bekannten Kalibrierungsmusters (51) innerhalb des ersten Bildes (I1) zu erfassen und Merkmale des bekannten Kalibrierungsmusters (51) innerhalb des zweiten Bildes (I2) zu erfassen,

- eine Homographieberechnungseinheit (151), die angepasst ist, um eine erste Homographie des ersten Bildes (I1) und des Kalibrierungsziels durch Bestimmen einer Position, einer Orientierung und/oder einer Verformung der Merkmale des bekannten Kalibrierungsmusters (51) innerhalb des ersten Bildes (I1) zu bestimmen und um eine zweite Homographie des zweiten Bildes (I2) und des Kalibrierungsziels durch Bestimmen einer Position, einer Orientierung und/oder einer Verformung der Merkmale des bekannten Kalibrierungsmusters (51) innerhalb des zweiten Bildes (I2) zu bestimmen, und

- eine Merkmalsextrapolationseinheit (152, 153), die angepasst ist, um weitere Merkmale des bekannten Kalibrierungsmusters (51) außerhalb des Sichtfeldes des ersten Bildes (I1) basierend auf dem bekannten Kalibrierungsmuster (51) und der ersten Homographie zu extrapolieren und um Merkmale des bekannten Kalibrierungsmusters (51) außerhalb des Sichtfeldes des zweiten Bildes (I2) basierend auf dem bekannten Kalibrierungsmuster (51) und der zweiten Homographie zu extrapolieren, und

- eine Geometrieberechnungseinheit (142), die angepasst ist, um eine dritte Homographie zwischen dem ersten Bild (I1) und dem zweiten Bild (I2) basierend auf den Merkmalen des bekannten Kalibrierungsmusters (51) innerhalb des ersten Bildes, den Merkmalen des bekannten Kalibrierungsmusters (51) innerhalb des zweiten Bildes, den extrapolierten weiteren Merkmalen des bekannten Kalibrierungsmusters (51) außerhalb des Sichtfeldes des ersten Bildes (I1) und den extrapolierten weiteren Merkmalen des bekannten Kalibrierungsmusters (51) außerhalb des Sichtfeldes des zweiten Bildes (I2) zu bestimmen; wobei das bekannte Kalibrierungsmuster (51) ein sich wenigstens teilweise nicht wiederholendes geometrisches Muster ist, wobei der erste Bereich des Kalibrierungsziels (50) wenigstens ein erstes sich nicht wiederholendes Merkmal des bekannten Kalibrierungsmusters (51) darstellt, wobei der zweite Bereich des Kalibrierungsziels (50) wenigstens ein zweites sich nicht wiederholendes Merkmal des bekannten Kalibrierungsmusters (51) darstellt, wobei die Merkmalserkennungseinheit (140) für Folgendes angepasst ist:

- Erfassen wenigstens des ersten sich nicht wiederholenden Merkmals des bekannten Kalibrierungsmusters (51) innerhalb des ersten Bildes, und

- Erfassen wenigstens des zweiten sich nicht wiederholenden Merkmals des bekannten Kalibrierungsmusters (51) innerhalb des zweiten Bildes, wobei die Homographiebestimmungseinheit (151) angepasst ist, um die erste Homographie durch Bestimmen wenigstens der Position und/oder Orientierung und/oder Verformung des ersten sich nicht wiederholenden Merkmals des bekannten Kalibrierungsmusters (51) innerhalb des ersten Bildes (I1) zu bestimmen und um die zweite Homographie durch Bestimmung wenigstens der Position und/oder Orientierung und/oder Verformung des zweiten sich nicht wiederholenden Merkmals des bekannten Kalibrierungsmusters (51) innerhalb des zweiten Bildes zu bestimmen.

2. Bildverarbeitungsvorrichtung (132) nach Anspruch 1, wobei der erste Bereich des Kalibrierungsziels (50) und der zweite Bereich des Kalibrierungsziels (50) wenigstens teilweise unterschiedliche Bereiche des bekannten Kalibrierungsmusters (51) umfassen.

3. Bildverarbeitungsvorrichtung (132) nach Anspruch 1, wobei das erste Bild (I1) von einer ersten Kamera (131) aufgenommen wird und das zweite Bild (I2) von einer zweiten Kamera (131) zu einem gleichen Zeitpunkt aufgenommen wird und/oder wobei die erste Kamera (131) und die zweite Kamera (131) eine feste geometrische Anordnung aufweisen, wenn das erste Bild (I1) und das zweite Bild (I2) aufgenommen werden.

4. Bildverarbeitungsvorrichtung (132) nach Anspruch 1, wobei das bekannte Kalibrierungsmuster (51) ein sich wiederholendes geometrisches Muster ist, wobei der erste Bereich des Kalibrierungsziels (50) wenigstens eine erste Grenze und/oder Ecke des sich wiederholenden geometrischen Musters darstellt, wobei der zweite Bereich des Kalibrierungsziels (50) wenigstens eine zweite Grenze und/oder Ecke des sich wiederholenden geometrischen Musters darstellt, wobei die Merkmalserkennungseinheit (140) für Folgendes angepasst ist: Erfassen wenigstens der ersten Grenze und/oder Ecke des sich wiederholenden geometrischen Musters innerhalb des ersten Bildes und Erfassen wenigstens der zweiten Grenze und/oder Ecke des sich wiederholenden geometrischen Musters innerhalb des zweiten Bildes, wobei die Homographieberechnungseinheit (151) angepasst ist, um die erste Homographie durch Bestimmen der Position und/oder Orientierung und/oder Verformung wenigstens der ersten Grenze und/oder Ecke des sich wiederholenden geometrischen Musters innerhalb des ersten Bildes zu bestimmen und um die zweite Homographie durch Bestimmen der Position und/oder Orientierung und/oder Verformung der wenigstens zweiten Grenze und/oder Ecke des sich wiederholenden geometrischen Musters innerhalb des zweiten Bildes zu bestimmen.

5. Bildverarbeitungsvorrichtung (132) nach Anspruch 1, wobei das bekannte Kalibrierungsmuster (51) ein Fotografiebild ist, wobei die Homographiebestimmungseinheit (151) angepasst ist, um die erste Homographie durch Durchführen einer Korrespondenzsuche nach dem ersten Bereich des Kalibrierungsziels (50) innerhalb des ersten Bildes zu bestimmen und um die zweite Homographie durch Durchführen einer Korrespondenzsuche nach dem zweiten Bereich des Kalibrierungsziels (50) innerhalb des zweiten Bildes zu bestimmen.

6. Bildverarbeitungsvorrichtung (132) nach Anspruch 5, wobei die durch die Homographiebestimmungseinheit durchgeführte Korrespondenzsuche eine wahrscheinlichkeitsbasierte Suche oder eine Merkmalsübereinstimmungssuche ist.

7. Bildverarbeitungsvorrichtung (132) nach Anspruch 1, wobei die Geometrieberechnungseinheit für Folgendes angepasst ist:

   - Bestimmen von Übereinstimmungsmerkmalen innerhalb der Merkmale des bekannten Kalibrierungsmusters (51) innerhalb des ersten Bildes (I1) und der extrapolierten weiteren Merkmale des bekannten Kalibrierungsmusters (51) außerhalb des Sichtfeldes des zweiten Bildes,
   - Bestimmen von Übereinstimmungsmerkmalen innerhalb der Merkmale des bekannten Kalibrierungsmusters (51) innerhalb des zweiten Bildes (I2) und der extrapolierten weiteren Merkmale des bekannten Kalibrierungsmusters (51) außerhalb des Sichtfeldes des ersten Bildes, und
   - Bestimmen der dritten Homographie, sodass sie

      ○ die Merkmale des bekannten Kalibrierungsmusters (51) innerhalb des ersten Bildes (I1) in die übereinstimmenden extrapolierten weiteren Merkmale des bekannten Kalibrierungsmusters (51) außerhalb des Sichtfeldes des zweiten Bildes (I2) umwandelt, und
      ○ die Merkmale des bekannten Kalibrierungsmusters (51) innerhalb des zweiten Bildes (I2) in die übereinstimmenden extrapolierten weiteren Merkmale des bekannten Kalibrierungsmusters (51) außerhalb des Sichtfeldes des ersten Bildes (I1) umwandelt.

8. Bildverarbeitungsvorrichtung (132) nach Anspruch 1 bis 7, wobei die Bildverarbeitungsvorrichtung (132) zum Durchführen einer geometrischen Kalibrierung mehrerer Bilder (I1, I2) angepasst ist, wobei jedes der Bilder (I1, I2) der mehreren Bilder (I1, I2) einen Bereich des Kalibrierungsziels (50) darstellt, wobei die Homographiebestimmungseinheit (151) angepasst ist, um eine individuelle Homographie für jedes der Bilder (I1, I2) der mehreren Bilder (I1, I2) in Bezug auf das Kalibrierungsziel (50) zu bestimmen und wobei die Geometrieberechnungseinheit (142) angepasst ist, um eine Homographie für jedes der Bilder (I1, I2) der mehreren Bilder (I1, I2) in Bezug auf ein einzelnes Referenzbild der mehreren Bilder (I1, I2) zu bestimmen.

9. Abbildungssystem (133), umfassend eine Bildverarbeitungsvorrichtung (132) nach Anspruch 1 und wenigstens eine erste Kamera (131) und ein Kalibrierungsziel (50), wobei die erste Kamera (131) angepasst ist, um das erste Bild (I1) und das zweite Bild (I2) durch aufeinanderfolgendes Aufnehmen von Bildern des Kalibrierungsziels (50) zu erzeugen.

10. Abbildungssystem (133), umfassend eine Bildverarbeitungsvorrichtung (132) nach Anspruch 1, eine erste Kamera (130), eine zweite Kamera (131) und ein Kalibrierungsziel (50), wobei die erste Kamera (13) und die zweite Kamera (131) eine feste geometrische Anordnung aufweisen, wobei die erste Kamera (130) angepasst ist, um das erste Bild (I1) zu erzeugen, und die zweite Kamera (131) angepasst ist, um das zweite Bild (I2) durch gleichzeitiges Aufnehmen von Bildern des Kalibrierungsziels (50) zu erzeugen.

11. Abbildungssystem (133) nach Anspruch 10, umfassend eine Bildverarbeitungsvorrichtung (132) nach Anspruch 9, wobei wobei das Abbildungssystem (133) mehrere Kameras umfasst.

12. Abbildungssystem (133) nach Anspruch 10, wobei angrenzende Kameras kein gemeinsames Sichtfeld aufweisen.

13. Bildverarbeitungsverfahren zum Durchführen einer geometrischen Kalibrierung wenigstens eines ersten Bildes (I1) und eines zweiten Bildes, wobei das erste Bild (I1) einen ersten Bereich eines Kalibrierungsziels (50) darstellt und das zweite Bild (I2) einen zweiten Bereich des Kalibrierungsziels (50) darstellt, wobei die Oberfläche des Kalibrierungsziels (50) ein bekanntes Kalibrierungsmuster (51) aufweist, wobei das bekannte Kalibrierungsmuster (51) ein sich wenigstens teilweise nicht wiederholendes geometrisches Muster ist, wobei der erste Bereich des Kalibrierungsziels (50) wenigstens ein erstes sich nicht wiederholendes Merkmal des bekannten Kalibrierungsmusters (51) darstellt, wobei der zweite Bereich des Kalibrierungsziels (50) wenigstens ein zweites sich nicht wiederholendes Merkmal des bekannten Kalibrierungsmusters (51) darstellt, wobei das Bildverarbeitungsverfahren Folgendes umfasst:

- Erfassen (162) wenigstens des ersten sich nicht wiederholenden Merkmals des bekannten Kalibrierungsmusters (51) innerhalb des ersten Bildes,
- Erfassen (162) wenigstens des zweiten sich nicht wiederholenden Merkmals des bekannten Kalibrierungsmusters (51) innerhalb des zweiten Bildes,
- Bestimmen (163) einer ersten Homographie des ersten Bildes (I1) und des Kalibrierungsziels durch Bestimmen einer Position, einer Orientierung und/oder einer Verformung der Merkmale des bekannten Kalibrierungsmusters (51) innerhalb des ersten Bildes (I1),
- Bestimmen (163) einer zweiten Homographie des zweiten Bildes (I2) und des Kalibrierungsziels durch Bestimmen einer Position, einer Orientierung und/oder einer Verformung der Merkmale des bekannten Kalibrierungsmusters (51) innerhalb des zweiten Bildes (I2),
- Extrapolieren (164) weiterer Merkmale des bekannten Kalibrierungsmusters (51) außerhalb des Sichtfeldes des ersten Bildes (I1) basierend auf dem bekannten Kalibrierungsmuster (51) und der ersten Homographie,
- Extrapolieren (164) von Merkmalen des bekannten Kalibrierungsmusters (51) außerhalb des Sichtfeldes des zweiten Bildes (I2) basierend auf dem bekannten Kalibrierungsmuster (51) und der zweiten Homographie, und
- Bestimmen (165) einer dritten Homographie zwischen dem ersten Bild (I1) und dem zweiten Bild (I2) basierend auf den Merkmalen des bekannten Kalibrierungsmusters (51) innerhalb des ersten Bildes (I1), den Merkmalen des bekannten Kalibrierungsmusters (51) innerhalb des zweiten Bildes (I2), den extrapolierten weiteren Merkmalen des bekannten Kalibrierungsmusters (51) außerhalb des Sichtfeldes des ersten Bildes (I1) und den extrapolierten weiteren Merkmalen des bekannten Kalibrierungsmusters (51) außerhalb des Sichtfeldes des zweiten Bildes (I2).

14. Computerprogramm mit einem Programmcode zum Durchführen des Verfahrens nach Anspruch 13, wenn das Computerprogramm auf einem Computer abläuft.

## Revendications

1. Dispositif de traitement d'image (132) pour effectuer un étalonnage géométrique d'au moins une première image (I1) et une seconde image (I2), la première image (I1) représentant une première section d'une cible d'étalonnage (50) et la seconde image (I2) représentant une seconde section de la cible d'étalonnage (50), la surface de la cible d'étalonnage (50) présentant un motif d'étalonnage connu (51), le dispositif de traitement d'image (132) comprenant :

- une unité de reconnaissance de caractéristiques (140) conçue pour détecter des caractéristiques du motif d'étalonnage connu (51) dans la première image (I1), et pour détecter des caractéristiques du motif d'étalonnage connu (51) dans la seconde image (I2),
- une unité de calcul d'homographie (151) conçue pour déterminer une première homographie de la première image (I1) et de la cible d'étalonnage en déterminant au moins l'une parmi une position, une orientation et une déformation des caractéristiques du motif d'étalonnage connu (51) dans la première image (I1), et pour déterminer une deuxième homographie de la seconde image (I2) et de la cible d'étalonnage en déterminant au moins l'une parmi une position, une orientation et une déformation des caractéristiques du motif d'étalonnage connu (51) dans la seconde image (I2), et
- une unité d'extrapolation de caractéristiques (152, 153) conçue pour extrapoler des caractéristiques supplémentaires du motif d'étalonnage connu (51) en dehors du champ de vision de la première image (I1) sur la base du motif d'étalonnage connu (51) et de la première homographie, et pour extrapoler des caractéristiques du motif d'étalonnage connu (51) en dehors du champ de vision de la seconde image (I2) sur la base du motif d'étalonnage connu (51) et de la deuxième homographie, et
- une unité de calcul de géométrie (142) conçue pour déterminer une troisième homographie entre la première image (I1) et la seconde image (I2) sur la base des caractéristiques du motif d'étalonnage connu (51) dans la première image, des caractéristiques du motif d'étalonnage connu (51) dans la seconde image, des caractéristiques supplémentaires extrapolées du motif d'étalonnage connu (51) en dehors du champ de vision de la première image (I1), et des caractéristiques supplémentaires extrapolées du motif d'étalonnage connu (51) en dehors du champ de vision de la seconde image (I2) ; le motif d'étalonnage connu (51) étant un motif géométrique au moins partiellement non répétitif, la première section de la cible d'étalonnage (50) représentant au moins une première caractéristique non répétitive du motif d'étalonnage connu (51), la seconde section de la cible d'étalonnage (50) représentant au moins une seconde caractéristique non répétitive du motif d'étalonnage connu (51), l'unité de reconnaissance de caractéristiques (140) étant conçue pour
- détecter au moins la première caractéristique non répétitive du motif d'étalonnage connu (51) dans la première image, et
- détecter au moins la seconde caractéristique non répétitive du motif d'étalonnage connu (51) dans la seconde image, l'unité de détermination d'homographie (151) étant conçue pour déterminer la première homographie en déterminant au moins la position et/ou l'orientation et/ou la déformation de la première caractéristique non répétitive du motif d'étalonnage connu (51) dans la première image (I1) et pour déterminer la deuxième homographie en déterminant au moins la position et/ou l'orientation et/ou la déformation de la seconde caractéristique non répétitive du motif d'étalonnage connu (51) dans la seconde image.

2. Dispositif de traitement d'image (132) selon la revendication 1, dans lequel la première section de la cible d'étalonnage (50) et la seconde section de la cible d'étalonnage (50) comprennent au moins partiellement des sections différentes du motif d'étalonnage connu (51).

3. Dispositif de traitement d'image (132) selon la revendication 1, dans lequel la première image (I1) est enregistrée par une première caméra (131) et la seconde image (I2) est enregistrée par une seconde caméra (131) en même temps, et/ou dans lequel la première caméra (131) et la seconde caméra (131) ont une disposition géométrique fixe lorsque la première image (I1) et la seconde image (I2) sont enregistrées.

4. Dispositif de traitement d'image (132) selon la revendication 1, dans lequel le motif d'étalonnage connu (51) est un motif géométrique répétitif, la première section de la cible d'étalonnage (50) représentant au moins une première bordure et/ou au moins un coin du motif géométrique répétitif, la seconde section de la cible d'étalonnage (50) représentant au moins une seconde bordure et/ou au moins un coin du motif géométrique répétitif, l'unité de reconnaissance de caractéristiques (140) étant conçue pour détecter au moins la première bordure et/ou au moins le coin du motif géométrique répétitif dans la première image, et pour détecter au moins la seconde bordure et/ou au moins le coin du motif géométrique répétitif dans la seconde image, l'unité de calcul d'homographie (151) étant conçue pour déterminer la première homographie en déterminant la position et/ou l'orientation et/ou la déformation d'au moins la première bordure et/ou d'au moins le coin du motif géométrique répétitif dans la première image, et pour déterminer la deuxième homographie en déterminant la position et/ou l'orientation et/ou la déformation d'au moins la seconde bordure et/ou d'au moins le coin du motif géométrique répétitif dans la seconde image.

5. Dispositif de traitement d'image (132) selon la revendication 1, dans lequel le motif d'étalonnage connu (51) est une image photographique, l'unité de détermination d'homographie (151) étant conçue pour déterminer la première homographie en effectuant une recherche de correspondance pour la première section de la cible d'étalonnage (50) dans la première image, et pour déterminer la deuxième homographie en effectuant une recherche de correspondance pour la seconde section de la cible d'étalonnage (50) dans la seconde image.

6. Dispositif de traitement d'image (132) selon la revendication 5, dans lequel la recherche de correspondance effectuée par l'unité de détermination d'homographie est une recherche fondée sur la probabilité ou une recherche par correspondance de caractéristiques.

7. Dispositif de traitement d'image (132) selon la revendication 1, dans lequel l'unité de calcul de géométrie est conçue pour

   - déterminer des caractéristiques de correspondance dans les caractéristiques du motif d'étalonnage connu (51) dans la première image (I1) et les caractéristiques supplémentaires extrapolées du motif d'étalonnage connu (51) en dehors du champ de vision de la seconde image,
   - déterminer des caractéristiques de correspondance dans les caractéristiques du motif d'étalonnage connu (51) dans la seconde image (I2) et les caractéristiques supplémentaires extrapolées du motif d'étalonnage connu (51) en dehors du champ vision de la première image, et
   - déterminer la troisième homographie de façon à ce qu'elle

      o transforme les caractéristiques du motif d'étalonnage connu (51) dans la première image (I1) en caractéristiques supplémentaires extrapolées correspondantes du motif d'étalonnage connu (51) en dehors du champ de vision de la seconde image (I2), et
      o transforme les caractéristiques du motif d'étalonnage connu (51) dans la seconde image (I2) en caractéristiques supplémentaires extrapolées correspondantes du motif d'étalonnage connu (51) en dehors du champ de vision de la première image (I1).

8. Dispositif de traitement d'image (132) selon les revendications 1 à 7, dans lequel le dispositif de traitement d'image (132) est conçu pour effectuer un étalonnage géométrique d'une pluralité d'images (I1, I2), chacune des images (I1, I2) de la pluralité d'images (I1, I2) représentant une section de la cible d'étalonnage (50), l'unité de détermination d'homographie (151) étant conçue pour déterminer une homographie individuelle pour chacune des images (I1, I2) de la pluralité d'images (I1, I2) en ce qui concerne la cible d'étalonnage (50), et l'unité de calcul de géométrie (142) étant conçue pour déterminer une homographie pour chacune des images (I1, I2) de la pluralité d'images (I1, I2) en ce qui concerne une seule image de référence de la pluralité d'images (I1, I2).

9. Système d'imagerie (133) comprenant un dispositif de traitement d'image (132) selon la revendication 1 et au moins une première caméra (131) et une cible d'étalonnage (50), la première caméra (131) étant conçue pour générer la première image (I1) et la seconde image (I2) par enregistrement successif d'images de la cible d'étalonnage (50).

10. Système d'imagerie (133) comprenant un dispositif de traitement d'image (132) selon la revendication 1, une première caméra (130), une seconde caméra (131) et une cible d'étalonnage (50), la première caméra (13) et la seconde caméra (131) présentant une disposition géométrique fixe, la première caméra (130) étant conçue pour générer la première image (I1) et la seconde caméra (131) étant conçue pour générer la seconde image (I2) par enregistrement simultané d'images de la cible d'étalonnage (50).

11. Système d'imagerie (133) selon la revendication 10, comprenant un dispositif de traitement d'image (132) selon la revendication 9, le système d'imagerie (133) comprenant une pluralité de caméras.

12. Système d'imagerie (133) selon la revendication 10, dans lequel les caméras adjacentes n'ont pas de champ de vision commun.

13. Procédé de traitement d'image pour effectuer un étalonnage géométrique d'au moins une première image (I1) et une seconde image, la première image (I1) représentant une première section d'une cible d'étalonnage (50) et la seconde image (I2) représentant une seconde section de la cible d'étalonnage (50), la surface de la cible d'étalonnage (50) présentant un motif d'étalonnage connu (51), le motif d'étalonnage connu (51) étant un motif géométrique au moins partiellement non répétitif, la première section de la cible d'étalonnage (50) représentant au moins une première caractéristique non répétitive du motif d'étalonnage connu (51), la seconde section de la cible d'étalonnage (50) représentant au moins une seconde caractéristique non répétitive du motif d'étalonnage connu (51), le procédé de traitement d'image comprenant

   - la détection (162) d'au moins la première caractéristique non répétitive du motif d'étalonnage connu (51) dans la première image,
   - la détection (162) d'au moins la seconde caractéristique non répétitive du motif d'étalonnage connu (51) dans la seconde image,

- la détermination (163) d'une première homographie de la première image (I1) et de la cible d'étalonnage en déterminant au moins l'une parmi une position, une orientation et une déformation des caractéristiques du motif d'étalonnage connu (51) dans la première image (I1),
- la détermination (163) d'une deuxième homographie de la seconde image (I2) et de la cible d'étalonnage en déterminant au moins l'une parmi une position, une orientation et une déformation des caractéristiques du motif d'étalonnage connu (51) dans la seconde image (I2),
- l'extrapolation (164) de caractéristiques supplémentaires du motif d'étalonnage connu (51) en dehors du champ de vision de la première image (I1) sur la base du motif d'étalonnage connu (51) et de la première homographie,
- l'extrapolation (164) de caractéristiques du motif d'étalonnage connu (51) en dehors du champ de vision de la seconde image (I2) sur la base du motif d'étalonnage connu (51) et de la deuxième homographie, et
- la détermination (165) d'une troisième homographie entre la première image (I1) et la seconde image (I2) sur la base des caractéristiques du motif d'étalonnage connu (51) dans la première image (I1), des caractéristiques du motif d'étalonnage connu (51) dans la seconde image (I2), des caractéristiques supplémentaires extrapolées du motif d'étalonnage connu (51) en dehors du champ de vision de la première image (I1), et des caractéristiques supplémentaires extrapolées du motif d'étalonnage connu (51) en dehors du champ de vision de la seconde image (I2).

14. Programme informatique avec un code de programme pour exécuter le procédé selon la revendication 13 lorsque le programme informatique fonctionne sur un ordinateur.

Checker pattern    14    Overlap region    15

FOV
left camera

FOV
right camera

left camera    right camera

10    **Fig. 1**    11

Checker pattern    14    Overlap region

image
left camera

image
right camera

20    21

Non-overlap region

**Fig. 2**

Checker pattern

34 Overlap region

FOV
left camera

FOV
right camera

left camera

right camera

30

31

**Fig. 3**

34 Overlap region

Checker pattern

image
left camera

image
right camera

40

41

Non-overlap region

**Fig. 4**

50
51

H_i2

H_i1

image
right camera

52    53    H_12

image
left camera

**Fig. 5**

el2

el1

l1

l2

Pseudo-front view

# Fig. 6

Extrapolated planes

FOV1 | FOV2

Top view

# Fig. 7

Fig. 8

Fig. 9

**Fig. 10**

Source point set          Target point set

I1          H_12          I2

**Fig. 11**

Source
point set          H_12
(Ransac)          Target
point set

**Fig. 12**

50

133

51

130

131

132

Geometric camera calibration

Reference camera, L or R (calibrate Left-to-right, or right to left)

**Fig. 13**

**Fig. 14**

Calibration
Pattern
corners

Camera ID
(left/right)

141a, b

150      151              152              153

| Establish matching points (reference calibration model) | Compute homography (H) | Warp calibration model (H^-1) | Point merge and numbering |

Reference
Calibration model

Fig. 15

Detected+
extrapolated
corners

Record first image and second image — 160

Input first image and second image — 161

Detect features of a known calibration pattern
within the first and second images — 162

Determine first and second homography by determining
position / orientation / deformation of the features within the images — 163

Extrapolate further features of the known calibration pattern
outside the fields of view of the first and second images
based upon the known calibration pattern
and the first and second homographies — 164

Determine third homography between the first and second image
based upon the features of the known calibration pattern within the
first image, the features of the known calibration pattern within
the second image, the extrapolated further features of the known
calibration pattern outside of the field of view of the first image,
and the extrapolated further features of the known calibration pattern
outside of the field of view of the second image — 165

## Fig. 16

**EP 3 216 005 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GREGORIJ KURILLO.** *Geometric and Color Calibration of Multiview Panoramic Cameras for Life-Size 3D Immersive Video*